Europäisches Patentamt

European Patent Office

Office européen des brevets

(11) Veröffentlichungsnummer: **0 262 503**
**A2**

(12) **EUROPÄISCHE PATENTANMELDUNG**

(21) Anmeldenummer: **87113450.8**

(22) Anmeldetag: **15.09.87**

(51) Int. Cl.⁴: **C09C 1/24**

(30) Priorität: **27.09.86 DE 3632913**

(43) Veröffentlichungstag der Anmeldung:
**06.04.88 Patentblatt 88/14**

(84) Benannte Vertragsstaaten:
**DE ES FR GB IT NL**

(71) Anmelder: **BAYER AG**
**Konzernverwaltung RP Patentabteilung**
**D-5090 Leverkusen 1 Bayerwerk(DE)**

(72) Erfinder: **Burow, Wilfried, Dr.**
**Sollbrüggenstrasse 33**
**D-4150 Krefeld(DE)**
Erfinder: **Brunn, Horst, Dr.**
**Kemper Allee 18**
**D-4005 Meerbusch(DE)**

(54) **Eisenoxidfarbpigmente mit verbesserten Verarbeitungseigenschaften und verbesserter Koloristik, Verfahren zu deren Herstellung sowie ihre Verwendung.**

(57) Die vorliegende Erfindung betrifft Eisenoxidfarbpigmente mit verbesserten Verarbeitungseigenschaften und verbesserten koloristischen Eigenschaften, bei denen der Wert für den isoelektrischen Punkt größer 7, vorzugsweise größer 8, ist.

EP 0 262 503 A2

## Eisenoxidfarbpigmente mit verbesserten Verarbeitungseigenschaften und verbesserter Koloristik, Verfahren zu deren Herstellung sowie ihre Verwendung

Die vorliegende Erfindung betrifft neue Eisenoxidfarbpigmente mit verbesserten Verarbeitungseigenschaften und verbesserter Koloristik, Verfahren zu deren Herstellung sowie ihre Verwendung.

Eisenoxidfarbpigmente werden universell als farbgebende Komponenten in der Baustoff-, Lack-und Kunststoffindustrie eingesetzt.

An die Eisenoxidfarbpigmente werden hohe Anforderungen hinsichtlich Qualitätskonstanz und Verarbeitungsfreundlichkeit gestellt. So wird z.B. in der Lackindustrie an Stammpasten, die Eisenoxidfarbpigmente enthalten, die Forderung gestellt, daß die Stammpasten bei allen Auflackungen jeweils zur gleichen Farbtongebung führen, unabhängig von der chemischen Natur des jeweiligen Bindemittels. Ein Verlust an Farbreinheit oder Hellig keit in einzelnen Auflackungen darf nicht beobachtet werden. Ebenso soll die resultierende Farbstärke bei allen einzelnen Auflackungen gleich sein.

Weiterhin werden exzellente Verarbeitungseigenschaften erwartet. Die Pigmente sollen in der Bindemittelanreibung leicht dispergierbar sein; ein Viskositätsanstieg, der eine Weiterverarbeitung unmöglich macht, soll nicht beobachtet werden. Weiterhin ist man an einer möglichst niedrigen Ausgangsviskosität interessiert, um möglichst hochpigmentierte Stammpasten herstellen zu können. Bindemittelunverträglichkeiten, Entmischung, Ausschwimmen oder Flockung dürfen nicht auftreten.

Das Ziel der vorliegenden Erfindung ist es somit, Eisenoxidfarbpigmente zur Verfügung zu stellen, die die beschriebenen Nachteile nicht aufweisen.

Überraschenderweise wurde nun gefunden, daß die Forderungen von solchen Eisenoxidfarbpigmenten erfüllt werden, deren Wert für den isoelektrischen Punkt (iep) größer als 7 ist. Die isoelektrischen Punkte handelsüblicher Eisenoxidpigmente weisen Werte von kleiner als 7 auf (s. Tab. 1).

Gegenstand der vorliegenden Erfindung sind Eisenoxidfarbpigmente mit verbesserten Verarbeitungseigenschaften, universeller Anwendbarkeit und exzellenter Farbgebung, deren Wert für den isoelektrischen Punkt größer als 7, besonders bevorzugt größer als 8, ist.

Die isoelektrischen Punkte von Pigmenten lassen sich durch elektrophoretische Messungen bestimmen [Thomas M. Riddick, Control of Colloid stability through Zetapotential, 1968, New York].

Die Messung wird dabei an hochverdünnten Lösungen (0,001 g Pigment in 50 ml Lösung von $10^{-3} \times dm^{-3}$ $KNO_3$) ausgeführt. Hierzu wird am Meßgerät PEN KEM-System 3000 der Firma PEN KEM Inc., Bedford Hills, New York, eine Messung der elektrophoretischen Beweglichkeit $\mu$/s per V/cm im Bereich zwischen pH 1 und 14 ausgeführt, wobei der pH-Wert der Lösung jeweils mit $HNO_3$, NaOH eingestellt wird. Die elektrophoretische Beweglichkeit wird graphisch als Funktion des pH-Wertes aufgetragen. Der Schnittpunkt dieser Kurve mit der pH-Achse wird als isoelektrischer Punkt bezeichnet.

Es wurde weiterhin gefunden, daß solche Eisenoxidfarbpigmente isoelektrische Punkte von oberhalb 7 aufweisen, deren Pigmentoberflächen Verbindungen der Elemente aus der Gruppe Mg, Zn, Al, La, Y, Zr, Sn und Ca enthalten. Aus koloristischen Gründen sollten diese naturgemäß farblos sein. Erfindungsgemäß Pigmente sind somit solche, die eine Beschichtung aufweisen, die aus farblosen Verbindungen einer oder mehrerer der Gruppen Mg, Zn, Al, La, Y, Zr, Sn, Ca besteht. Ebenso sind durchdotierte Pigmente denkbar; eine Beschichtung ist aber aus Kostengründen zu bevorzugen.

Diese erfindungsgemäßen Pigmente zeigen verbesserte Verarbeitungseigenschaften, indem bei Ihnen nicht die genannten Verarbeitungsprobleme wie Farbtonstärkeschwankungen, Flockung, Ausschwimmen oder Ausgangsviskositätsanstieg in Pigmentanreibungen auftreten. Weiterhin zeigen die erfindungsgemäßen Pigmente eine deutlich verbesserte Hitzebeständigkeit, wie sie bei der Einarbeitung von Eisenoxidgelb in thermoplastische Kunststoffe notwending ist, und außerdem eine erheblich verbesserte Oxidationsbeständigkeit, die für Eisenoxidschwarzpigmente vorteilhaft ist.

Besonders bevorzugt sind solche Eisenoxidfarbpigmente, deren Beschichtung aus leicht verfügbaren Verbindungen, nämlich schwerlöslichen Verbindungen des Mg, Ca, Al und/oder Zn, besteht.

Für die Beschichtung ist es unerheblich, welcher Natur das beschichtete Eisenoxidfarbpigment ist, ob es sich um ein $\alpha$-FeOOH, $\gamma$-FeOOH, $\alpha$-Fe$_2$O$_3$, $\gamma$-Fe$_2$O$_3$, Fe$_3$O$_4$ handelt und nach welchem Verfahren es hergestellt wurde. In jedem Fall führt die Beschichtung zu der gewünschten Verbesserung.

Vorzugsweise sind die genannten Elemente in Mengen von 0,5 bis 10 Mol-% wirksam. In ihrer bevorzugten Ausführungsform beträgt die Menge der Elemente der Gruppe Mg, Zn, Al, La, Y, Zr, Sn, Ca 0,5 bis 10 Mol-%, bezogen auf den Gesamteisengehalt der Eisenoxidfarbpigmente.

Gegenstand der vorliegenden Erfindung sind auch Verfahren zur Herstellung der erfindungsgemäßen Pigmente. Die Beschichtung der Eisenoxidpigmente kann aus einer Einzelkomponente oder aus einer gemischten Verbindung aus der Gruppe Mg, Zn, Al, Ca, La, Y, Zr, Sn bestehen.

2

Zur Beschichtung können alle Verfahren angewendet werden, die zu einem schwerlöslichen Überzug der genannten Verbindung auf Eisenoxidpigmenten führen. Dazu gehören Aufmahlen, Auffällen oder Aufsprühen der genannten Verbindungen auf Eisenoxidpigmente.

Die Herstellung der erfindungsgemäßen Pigmente geschieht vorteilhafterweise so, daß auf Eisenoxidfarbpigmenten eine Beschichtung farbloser Verbindungen eines oder mehrerer Elemente aus der Gruppe Mg, Zn, Al, La, Y, Zr, Sn, Ca durch Aufsprühen, Aufmahlen und/oder Auffällen so vorgenommen wird, daß der Gehalt an Elementen der Gruppe Mg, Zn, La, Y, Zr, Sn, Ca 0,5 bis 10 Mol-%, bezogen auf den Gesamteisengehalt der Eisenoxidfarbpigmente, beträgt.

Besonders einfach gelingt die Herstellung dadurch, daß die Beschichtung durch Trocken-oder Naßmahlung aufgebracht wird. Soll die Beschichtung durch Auffällen erfolgen, so geht man zweckmäßigerweise von wasserlöslichen Mg-, Zn-, Al-, Ca-, La-, Y-, Zr-, Sn-Verbindungen aus, die in wäßriger Eisenoxidsuspension auf das Pigment als schwerlösliche Verbindung aufgefällt werden, z.B. als Oxid oder Mischoxid. Die Beschichtung kann auch aus anderen schwerlöslichen Verbindungen bestehen, z.B. aus Carbonaten, Phosphaten, Oxidhydroxiden usw., sofern sie den isoelektrischen Punkt des Eisenoxidfarbpigmentes in den Bereich ≥ 7 anheben.

Eine weitere Ausgestaltung des erfindungemäßen Verfahrens besteht somit darin, daß die Beschichtung durch Auffällen schwerlöslicher farbloser Verbindungen auf das Eisenoxidfarbpigment erfolgt.

Aufgrund der verbesserten Verarbeitungseigenschaften und der universellen Verwendbarkeit eignen sich die erfindungsgemäßen Eisenoxidfarbpigmente hervorragend als Farbmittel im Lack-, Kunststoff-und Baustoffbereich.

Gegenstand dieser Erfindung ist somit auch die Verwendung der erfindungsgemäßen Eisenoxidfarbpigmente zur Einfärbung von Lacksystemen, Dispersionen, Kunststoffen und Baustoffen. Nachfolgend wird die Erfindung beispielhaft beschrieben, wobei hierin keine Einschränkung der Erfindung auf die Beispiele zu sehen ist.

0 262 503

**T a b e l l e   1:** Isoelektrische Punkte handelsüblicher Eisenoxidfarbpigmente

| Bezeichnung des Handelsproduktes | Hersteller | Zusammensetzung | iep |
|---|---|---|---|
| Typ 2288 D | Pfizer | $\alpha$-FeOOH | 4,0 |
| Typ 420 | BAYER AG | $\alpha$-FeOOH | 4,0 |
| Typ 3910 | BAYER AG | $\alpha$-FeOOH | 5,5 |
| Typ 1410 M | BAYER AG | $\alpha$-FeOOH | 4,0 |
| Typ 1050 A | Cities Service | $\alpha$-FeOOH | 4,2 |
| Typ 320 | BAYER AG | $Fe_3O_4$ | 4,0 |
| Typ AC 5043 | BAYER AG | $\gamma$-FeOOH | 6,5 |
| Typ 8250 | BAYER AG | $\gamma$-Fe_2O_3$ | 3,5 |

**T a b e l l e  2:** Isoelektrische Punkte unbehandelter und beschichteter Eisenoxid-farbpigmente

| Produkt | unbehandeltes Pigment | Beschichtung [Gew.-%] | iep |
|---|---|---|---|
| A | Typ 1410 M, BAYER AG, $\alpha$-FeOOH | - | 4,0 |
| A1 | Typ 1410 M, BAYER AG, $\alpha$-FeOOH | 2 % $Al_2O_3$ | 10,0 |
| A2 | Typ 1410 M, BAYER AG, $\alpha$-FeOOH | 1 % ZnO, 0,5 % MgO | 9,2 |
| A3 | Typ 1410 M, BAYER AG, $\alpha$-FeOOH | 1 % MgO, 2 % $Al_2O_3$ | 9,0 |
| A4 | Typ 1410 M, BAYER AG, $\alpha$-FeOOH | 0,65 % $Al_2O_3$ | 8,6 |
| A5 | Typ 1410 M, BAYER AG, $\alpha$-FeOOH | 0,29 % $Al_2O_3$ | 8,3 |
| B | 320, BAYER AG, $Fe_3O_4$ | - | 4,0 |
| B1 | 320, BAYER AG, $Fe_3O_4$ | 4 % $Al_2O_3$ | 9,5 |
| C | AC 5043, BAYER AG, $\gamma$-FeOOH | - | 6,5 |
| C1 | AC 5043, BAYER AG, $\gamma$-FeOOH | 4 % $Al_2O_3$ | 9,6 |
| D | 8250, BAYER AG, $\gamma$-$Fe_2O_3$ | - | 3,5 |
| D1 | 8250, BAYER AG, $\gamma$-$Fe_2O_3$ | 4 % $Al_2O_3$ | 9,8 |

0 262 503

Herstellung der Bindemittelanreibung und Messung:

Die Prüfung der verarbeitungstechnischen Eigenschaften der Pigmente erfolgte durch deren Einarbeitung in eine so bezeichnete Abtönpaste gemäß folgender Rezeptur und Messung deren Viskosität:

40 Gewichtsteile Wasser
1 Gewichtsteile NaOH (10 %ig in Wasser)
61 Gewichtsteile Ethylenglykol
12 Gewichtsteile Span 80 *
4 Gewichtsteile Tween 80 *
100 Gewichtsteile Pigment

Nach der Anreibung der Pasten wurden ihre Viskosität (Krebs-Einheiten) mit einem Stormer Viskosimaten (Fa. Erickson, Hemer-Sundwig, Deutschland) bei Raumtemperatur ermittelt. Wie Tabelle 3 zeigt, sind mit den erfindungsgemäßen Pigmenten, bedingt durch die niederen Viskositätswerte, höher pigmentierte Stammpasten möglich.

* Produkte der Atlas Chemical Industrie N.V., Everberg, Belgien

Tabelle 3: Viskosität von Bindemittelanreibungen

| Produkt | Basispigment | Beschichtung [Gew.-%] | Viskosität [Krebs-EH] |
|---|---|---|---|
| A | 1410 M | - | 114 |
| A1 | 1410 M | 2 % $Al_2O_3$ | 96 |
| A2 | 1410 M | 1 % ZnO, 0,5 MgO | 82 |
| A3 | 1410 M | 1 % MgO, 2 % $Al_2O_3$ | 86 |
| A4 | 1410 M | 0,65 % $Al_2O_3$ | 102 |
| A5 | 1410 M | 0,29 % $Al_2O_3$ | 100 |
| B | 320 | - | 84 |
| B1 | 320 | 4 % $Al_2O_3$ | 74 |
| C | Al 5043 | - | 76 |
| C1 | Al 5043 | 4 % $Al_2O_3$ | 61 |
| D | 8250 | - | 129 |
| D1 | 8250 | 4 % $Al_2O_3$ | 106 |

Herstellung der Bindemittelanreibung und Messung:

Zur Prüfung des Flockungsverhaltens der Pigmente wurden im Weißlack auf Basis Alkydal F 650, Bayertitan RKB-2 (Bayer AG, Leverkusen) PVK = 10 % mit o.g. Pasten im Gewichtsverhältnis 90:5 eingefärbt. Lackaufzüge derart hergestellter Farben werden kurz vor dem Antrocknen ausgerieben (rub-out), wodurch die enthaltenen Pigmente in dem deflockulierten Zustand überführt werden. Ein farbmetrischer Vergleich (CIELAB System, DIN 6174, $\Delta E$ = Gesamtfarbstand) von ausgeriebenen und nicht ausgeriebenen Lacken erlaubt eine Aussage über die Flockulationsneigung der Pigmente in den betreffenden Systemen.

Tabelle 4: Farbtonabweichung in Bindemittelanreibung

| Produkt | Basispigment | Beschichtung [Gew.-%] | ΔE* |
|---------|--------------|------------------------|-----|
| A | 1410 M | - | 6,1 |
| A1 | 1410 M | 2 % $Al_2O_3$ | 0,7 |
| A2 | 1410 M | 1 % ZnO, 0,5 % MgO | 0,4 |
| A3 | 1410 M | 1 % MgO, 2 % $Al_2O_3$ | 1,5 |
| A4 | 1410 M | 0,65 % $Al_2O_3$ | 3,6 |
| A5 | 1410 M | 0,29 % $Al_2O_3$ | 3,3 |
| B | 320 | - | 4,6 |
| B1 | 320 | 4 % $Al_2O_3$ | 2,9 |
| C | AC 5043 | - | 4,4 |
| C1 | AC 5043 | 4 % $Al_2O_3$ | 1,7 |
| D | 8250 | - | 13,1 |
| D1 | 8250 | 4 % $Al_2O_3$ | 3,8 |

Beispiele: A1-A3, B1, C1, D1

Zu einer wäßrigen Suspension des Eisenoxidfarbpigmentes wird eine Lösung I gegeben und unter Rühren bei 25°C eine Lösung II in ca. 30 min zudosiert. Nach der Zudosierung wird die Suspension noch 30 min unter Rühren bei 25°C gehalten. Das Produkt wird salzfrei gewaschen, getrocknet und gemahlen.

Bei den eingesetzten Eisenoxidpigmenten handelt es sich ausschließlich um Handelsprodukte der BAYER AG.

Die Beschichtungs-und Meßverfahren sind den Tabellen 3 und 4 zu entnehmen.

Beispiele: A4 und A5

Aus den Eisenoxidfarbpigment 1410 M, Handelsprodukt der BAYER AG, und dem Zusatzstoff wird eine homogene Mischung hergestellt und das Gemisch auf einer Dampfstrahlmühle gemahlen.

## T a b e l l e  5:

| Beispiel | Eisenoxidsuspension | Lösung 1 | Lösung 2 |
|---|---|---|---|
| A1 | 4000 g 1410 M in 22 l Wasser | 262 ml $Al_2(SO_4)_3$-Lösung (1,00 Mol/l) | 177 ml Na-aluminat-Lösung (2,95 Mol $Al_2O_3$ + 8,87 Mol NaOH/l) |
| A2 | 400 g 1410 M in 4 l Wasser | 100 ml einer lösung mit (0,492 Mol $ZnSo_4$ + 0,496 Mol $MgSO_4$/l) | 50 ml NaOH-Lösung (3,952 Mol/l) |
| A3 | 400 g 1410 M in 4 l Wasser | 200 ml einer Lösung mit (0,496 Mol $MgSO_4$ + 0,393 Mol $Al_2(SO_4)_3$/l) | 100 ml NaOH-Lösung (4,342 Mol/l) |
| B1 | 100 g 320 in 1 l Wasser | 25 ml $Al_2(SO_4)_3$-Lösung (0,525 Mol/l) | 25 ml Na-aluminat-Lösung (1,048 Mol $Al_2O_3$ + 3,15 Mol NaOH/l) |
| C1 | 100 g Ac 5043 in 1 l Wasser | 25 ml $Al_2(SO_4)_3$-Lösung (0,525 Mol/l) | 25 ml Na-aluminat-Lösung (1,048 Mol $Al_2O_3$ + 3,15 Mol NaOH/l) |
| D1 | 100 g 8250 in 1 l Wasser | 25 ml $Al_2(SO_4)_3$-Lösung (0,525 Mol/l) | 25 ml Na-aluminat-Lösung (1,048 Mol $Al_2O_3$ + 3,15 Mol NaOH/l) |

**Tabelle 6:**

| Beispiel | Eisenoxidfarbpigment | Zusatzstoff |
|---|---|---|
| A4 | 4,5 kg | 45 g Tonerdehydrat |
| A5 | 4,5 kg | 43 ml Natriumaluminat-Lösung mit 300,8 g/l $Al_2O_3$ + 355 g/l NaOH |

## Ansprüche

1. Eisenoxidfarbpigmente mit verbesserten Verarbeitungseigenschaften und verbesserten koloristischen Eigenschaften, dadurch gekennzeichnet, daß der isoelektrische Punkt der Pigmente Werte größer 7, vorzugsweise größer 8, beträgt.

2. Eisenoxidfarbpigmente, gemäß Anspruch 1, dadurch gekennzeichnet, daß sie eine Beschichtung aufweisen, die aus farblosen Verbindungen einer oder mehrerer der Gruppe Mg, Zn, Al, La, Y, Zr, Sn, Ca besteht.

3. Eisenoxidfarbpigmente gemäß Anspruch 2, dadurch gekennzeichnet, daß die Beschichtung aus - schwerlöslichen Verbindungen des Mg, Ca, Al und/oder Zn besteht.

4. Eisenoxidfarbpigmente gemäß einem der Ansprüche 2 oder 3, dadurch gekennzeichnet, daß die Menge der Elemente der Gruppe Mg, Zn, Al, La, Y, Zr, Sn, Ca 0,5 bis 10 Mol-%, bezogen auf den Gesamteisengehalt der Eisenoxidfarbpigmente, beträgt.

5. Verfahren zur Herstellung der Eisenoxidfarbpigmente gemäß einem oder mehrerer der Ansprüche 1 bis 4, dadurch gekennzeichnet, daß auf Eisenoxidfarbpigmenten eine Beschichtung farbloser Verbindungen eines oder mehrerer Elemente aus der Gruppe Mg, Zn, Al, La, Y, Zr, Sn, Ca durch Aufsprühen, Aufmahlen und/oder Auffällen so vorgenommen wird, daß der Gehalt an Elementen der Gruppe Mg, Zn, La, Y, Zr, Sn, Ca 0,5 bis 10 Mol-%, bezogen auf den Gesamteisengehalt der Eisenoxidfarbpigmente, beträgt.

6. Verfahren gemäß Anspruch 5, dadurch gekennzeichnet, daß die Beschichtung durch Trocken-oder Naßmahlung aufgebracht wird.

7. Verfahren gemäß Anspruch 5, dadurch gekennzeichnet, daß die Beschichtung durch Auffällen von zur Bildung schwerlöslicher farbloser Verbindungen geeigneten Substanzen erfolgt.

8. Verwendung der Eisenoxidfarbpigmente gemäß einem oder mehrerer der Ansprüche 1 bis 7 zur Einfärbung von Lacksystemen, Dispersionen, Kunststoffen und Baustoffen.